# EUROPEAN PATENT APPLICATION

(11) **EP 1 180 738 A2**
(43) Date of publication of application: **20.02.2002**
(21) Application number: 01200014.7
(22) Date of filing: 08.01.2001
(51) Int. Cl.: G06F 9/46, G06F 11/00

(54) **High availability platform using a cross-interconnect driver**

(30) Priority: 27.06.2000 EP 00410068
(71) Applicant: Hewlett-Packard Company, Palo Alto, California 94304-1112 (US)
(72) Inventor: Wyld, Brian, 38190 Brignoud (FR); Julien, Eric, 69007 Lyon (FR)
(74) Representative: Lloyd, Richard Graham

(57) **Abstract**

A computer system includes, in operation, a host computer running a first operating system; a remote device coupled to the host computer through a network connection, having at least one resource, and running a second operating system; and a cross-interconnect driver having a first component running on the host computer and a second component running on the remote device, both components cooperating through the network connection such that an application program running on the host computer has access to the resource of the remote device as if it were on the host computer.

## Description

### Field of the Invention

The present invention relates to high availability computer platforms, especially those used for Signalling System 7 (SS7) network management.

### Background of the Invention

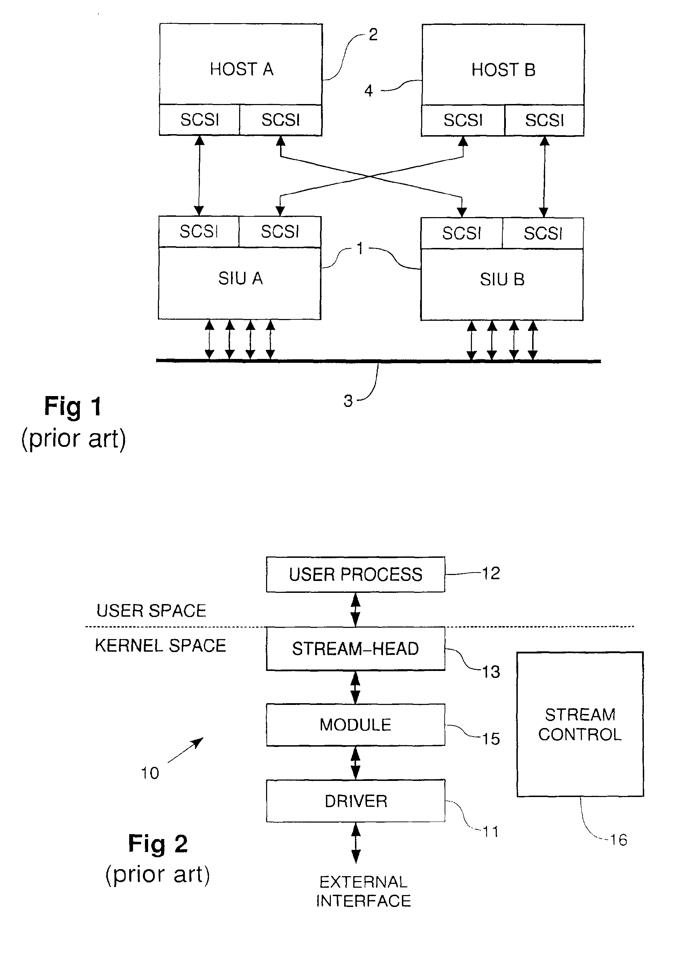

Figure 1 schematically shows an exemplary high availability computer platform, such as disclosed in US patent N° 5,978,933 and Hewlett-Packard Journal, August 1997, "High Availability in the HP OpenCall SS7 Platform". The platform includes two redundant Signalling Interface Units (SIU) 1, managed by a host computer 2. Each SIU is coupled to a signalling network 3 through several links. The platform may include a second host computer 4, for the purpose of taking over the management of the SIUs in case the first host 1 fails. Each interconnection between an SIU and a host is provided through an independent SCSI bus.

In practice, both SlUs are used at the same time to implement load balancing, and they are used at less than half their traffic throughput capacity, so that one SIU may take over all the traffic in case the other SIU fails.

The hosts run a Unix-like operating system and use the STREAMS mechanism to access the hardware, in particular the SIUs. The STREAMS mechanism supports development of network services and data communication drivers. In particular, the kernel mechanism allows for the setting up of a "stream" between a user-space process and a driver; a "stream" is a full-duplex processing and data transfer path in the operating system kernel between the user-space process and driver.

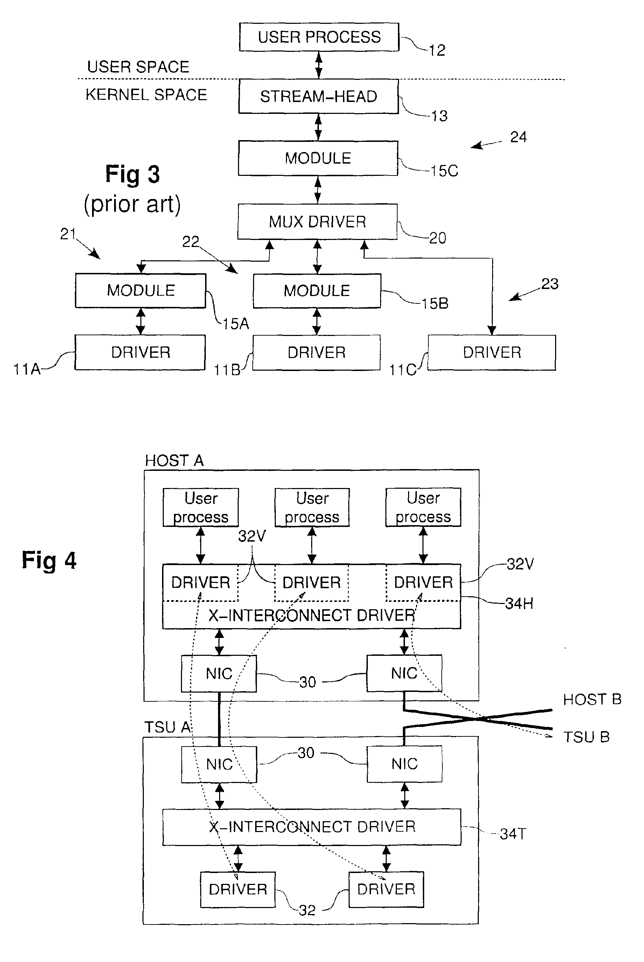

The STREAMS mechanism is well documented and a good introduction to the subject may be found, for example, in "UNIX System V/386, Release 3.2, Streams Primer" AT&T, published by Prentice Hall, 1989. Nevertheless, to facilitate an understanding of the present invention without reference to other documents, a brief description of the components of a stream and of the connection of a stream to a multiplexer driver will now be given with reference to Figures 2 and 3 of the accompanying drawings.

Figure 2 is a diagrammatic illustration of the basic components of a stream 10. As already noted, a stream is a full-duplex processing and data transfer path between a driver 11 in kernel space and a user process 12 in user space. A stream will always have a stream head 13 and a stream end, the latter being constituted by the driver 11. The stream head 13 provides the interface between the stream 10 and the user-space process 12 and its main function is to process streams-related user system calls. The stream end driver may be a device driver providing services to an external I/O device or an internal, "pseudo" device driver such as a multiplexer driver.

In addition to its stream head and stream end, a stream may have one or more modules 15 inserted between the stream head and stream end and serving to perform intermediate processing of data.

Data is passed from the driver 11 to the user-space process 12 and from the user-space process 12 to the driver 11 in messages.

The opening, control and closing of a stream is effected by the user-space process by issuing system calls which are serviced by a kernel mechanism represented in Figure 1 by the streams control block 16. Thus, to form the Figure 2 stream, the user-space process 12 must first issue a system call (an "open" call) requesting the streams control block 16 to open a stream between the user-space process and the driver 11, and then issue another system call (an ioctl "push" call) to add the module 15 to the stream. The ioctl push call is actually processed by the stream head 13 which uses the services of the block 16 to execute the push.

Figure 3 shows a more complex streams example. A plurality of streams are interconnected by a multiplexer driver 20. The multiplexer driver 20 shown is a lower multiplexer in that it multiplexes multiple lower streams 21, 22, 23 (that is, streams nearer device drivers) into a single upper stream 24 ( the stream nearer the user-space process); upper multiplexers are also possible in which multiple upper streams are multiplexed into a single lower stream. Whether an upper or a lower multiplexer, the multiplexer driver 20 comprises a functional entity that serves to multiplex/demultiplex the streams operationally associated with it.

To form the Figure 3 arrangement, the user-space process 12 first issues system calls to open streams 21, 22 and 23 to each of the device drivers 11A, B, C and stream 24 to the multiplexer driver 20. Next, the user-space process 12 issues push system calls to push the required modules 15A, B, C onto streams 21, 22 and 24. Finally, the user-space process issues appropriate ioctl calls to link the streams 21, 22 and 23 below the multiplexer driver 20.

In each host of the platform of Figure 1, a distinct driver will run for each of its two SCSI interfaces. A STREAMS multiplexer will be set up so that any process running on the host may access the two SCSI interface drivers, i.e. the two SlUs. Each SIU, as mentioned, above, has several links connected to the signalling network 3, and thus several corresponding interfaces. To send messages through each of these interfaces, the user application will use a single stream, i.e. the one opened to the SCSI driver corresponding to the SIU. The interfaces on the SIU and the data for them are then differentiated by the SCSI commands packed in the messages sent to the SCSI driver.

It is complex in such a system to keep track of the message flow between the host computers and the signalling network. In particular, the reconstitution of an error-free message flow when errors occur requires a considerable overhead. As a consequence, a switch-over forced by a failure of a host system or an SIU, will take a substantial amount of time. Currently, switch-over times of less than 6 seconds are targeted, and the above system may not satisfy this requirement in all circumstances.

### Summary of the Invention

The present invention is directed to providing a system in which it is simpler to keep track of a message flow between applications running on a host computer and interfaces on a remote device.

This is achieved by a computer system including, in operation, a host computer running a first operating system; a remote device coupled to the host computer through a network connection, having at least one resource, and running a second operating system; and a cross-interconnect driver having a first component running on the host computer and a second component running on the remote device, both components cooperating through the network connection such that an application program running on the host computer has access to the resource of the remote device as if it were on the host computer.

In a preferred embodiment, the computer system includes, in operation, a second host computer similar to the first, running standby applications corresponding to active applications running on the first host computer, such that, when an active application fails to communicate with the remote device, the corresponding standby application takes over communication with the remote device. The operating systems of the host computers and the remote device implement a STREAMS mechanism for user applications to access device drivers, and the second component of the cross-interconnect driver includes a STREAMS multiplexer coupling the two host computers to a device driver of said resource. The multiplexer has an initial setting where it couples the first host computer to the resource, and is arranged to automatically switch to a setting where it couples the second host computer to the resource when the first host computer fails to communicate with the remote device.

The foregoing and other objects, features, aspects and advantages of the invention will become apparent from the following detailed description of embodiments of the present invention when taken in conjunction with the accompanying drawings.

### Brief Description of the Drawings

Figure 1 schematically shows an architecture of a conventional high-availability platform.
Figure 2 is a diagram of a known I/O stream arrangement provided in the kernel space of a computer operating system.
Figure 3 is a diagram of a known streams configuration using a multiplexer driver.
Figure 4 is a diagram of a cross-interconnect driver in accordance with the present invention, having a component running on the operating system of a host computer, and a component running on an embedded operating system of a remote device.
Figure 5 is a diagram of a specific multiplexer driver used in the embedded operating system of the remote device.

### Best Mode of Carrying Out the Invention

In a system according to the invention, of the type of figure 1, a host computer is coupled to a remote device through a network connection instead of through a SCSI bus. Such a connection, unlike a bus connection, allows the remote device to be placed at a considerable distance from the host computer. This is convenient, because the host computer may need to be in a data center, whereas the remote device may be elsewhere. Moreover, a variety of standard protocols may be used over a network connection, in particular protocols such as XTP, which inherently allow error recovery - taking this burden off the higher level protocols or the user applications.

Moreover, the system is arranged so that resources present on the remote device, such as interfaces to a signalling network, appear to be within the host computer. More specifically, respective device drivers for the remote interfaces appear to run on the host computer, whereby user applications running on the host computer have individual access to each remote interface through its respective "virtual" device driver. This considerably simplifies keeping track of the message flow between the user applications and the remote interfaces, because each message is individualized, i.e. not bundled with other messages in a packet transmitted according to a separate protocol (SCSI in the case of figure 1) which may be inadequate for controlling the message flow.

This arrangement is achieved essentially by a "cross-interconnect" driver described hereunder in relation with figure 4.

Figure 4 is a partial diagram of a high availability platform according to the invention, showing one host computer A and one remote device, here named TSU A (Telecommunications Signalling Unit). As previously mentioned, the host computers A and B are connected to the remote devices or TSUs A and B through network connections. Each host and TSU therefore includes two network interface cards 30, each coupled to a different TSU or host.

The TSUs are no longer passive devices like the SlUs of figure 1. Each TSU runs an embedded operating system similar to that running on the host computers, preferably implementing the STREAMS mechanism for communicating with drivers. Therefore, the resources of each TSU, in particular the interfaces with the signalling network (3 in figure 1), are accessible by the embedded operating system of the TSU through a respective driver 32 running on the TSU.

The above mentioned cross-interconnect driver includes a first software component 34H running on a host computer and a second software component 34T running on a TSU. Both components interoperate through the network connections, handling all the network communication protocols, so that the drivers 32 running on the TSUs appear to be running on the host computers, as shown by "virtual" drivers 32V in the host-side component 34H.

In practice, in a Unix-type operating system, a device is accessed by a user program through a special file, usually placed in directory /dev. This file is in fact handled by the user program like a normal file, i.e. opened, read from, written to, and finally closed. What differentiates the device files, i.e. what causes the operating system to invoke the suitable drivers for handling the accesses to those files, is the so-called "major numbers" of the files. In the present case, there is a device file on the host computer for each remote driver 32. These device files all have the same "major number", causing the operating system to invoke the host-side component 34H of the cross-interconnect driver. The different drivers 32 of the TSUs are differentiated by the host-side component 34H thanks to distinct so-called "minor numbers" assigned to the device files.

The invoked host-side component 34H communicates with its TSU-side component 34T over the network, implementing all the necessary protocols for this, so that the data exchanged by the user program with the device files on the host is suitably exchanged by the TSU-side component 34T with the respective interfaces (component 34T acting here as a user-program accessing device files on the TSU, causing the embedded operating system of the TSU to invoke the suitable drivers 32 for handling those accesses).

In a normal situation, the "open" system call executed by a user program on a device file blocks the process until the operating system has checked the state of the device and returned a "0" value indicating that the device is ready. If the device is remote, and accessed over a relatively slow connection (a network), the process will be blocked for a significant amount of time.

To avoid this, the host-side component 34H of the cross-interconnect driver is arranged to check the last state of the TSU (stored locally in the form of the result of the last access to the TSU), instead of checking the state of the remote interface. If the state is bad, the process reissues the open call. If the state is valid, the host-side component sends an "open" message across the network. The TSU-side component receives the message and issues the open call to the TSU's embedded operating system, which this time reacts in the standard manner by checking the state of the interface. If this state happens to be bad, an error message is sent through the network back to the process that required the open, and any data the process started to write is discarded. If the STREAMS mechanism is used, such an error message is the standard "stream error" message.

Errors occurring within the transmission on the network are handled by the two components of the cross-interconnect driver, by using a suitable transmission protocol, such as XTP. Thus, such errors are transparent from the user program side of the host and from the interface driver side of the TSU, although they might introduce latency due to packet resends.

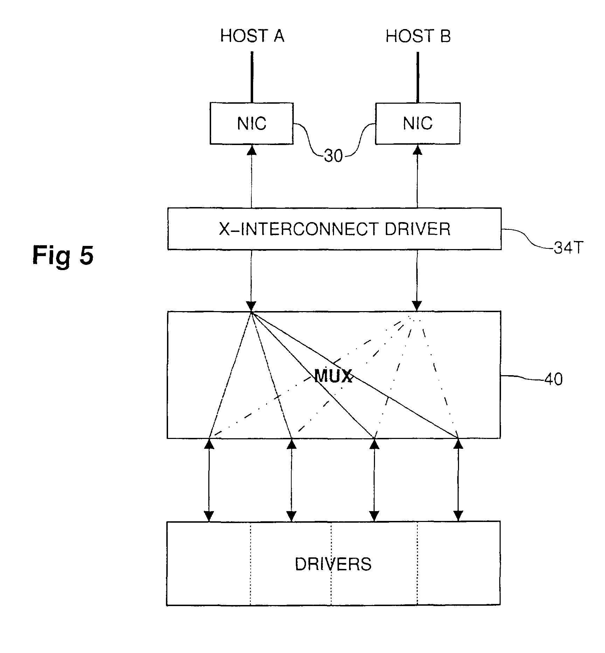

Preferably, the STREAMS mechanism is used in the host computers and the TSUs for communicating with drivers. Indeed, such a mechanism is particularly well adapted to the structure of the cross-interconnect driver, because most of its functionality is usable in its standard form. Furthermore, this mechanism will provide a simple solution, described in relation with figure 5, for handling switch-overs in case of failure.

When using the STREAMS mechanism, a device open call causes the opening of a stream and the stream is assigned a unique identifier. In a conventional system, the operating system assigns the stream the first "free" identifier in a pool of identifiers. Open calls are conventionally synchronous, i.e. the operating system waits for an "open success" result before assigning an identifier, and the identifier is freed in response to a stream close call. In contrast, in the system according to the invention, a stream can be opened prematurely (before truly checking that the device is ready). Such a stream is closed some time later and its identifier freed, after a "stream error" message, but data may be queued in the stream due to the response time to close the stream at the other end of the network. If the conventional system is used, the identifier of such a "ghost" stream could be assigned to a new stream in the meantime, whereby the garbage data it contains would be accepted as valid data through the new stream.

To avoid this, unique identifiers are assigned to successively opened streams. Such unique identifiers are generated, for instance, by a counter having a size such that any ghost stream is closed automatically by the operating system after a non-response time-out, by the time the counter wraps around.

Figure 5 is a diagram illustrating a particularly efficient solution, implemented in a TSU, for handling a switch over in case of a host failure, using the functionality of the STREAMS mechanism. The drivers that are normally coupled to the hosts through the TSU-side component 34T of the cross-interconnect driver, are coupled through a multiplexer driver 40. This multiplexer driver has an initial persistent setting, taken upon boot-up of the embedded operating system, where it interconnects the drivers and the hosts according to a default pattern, although no streams may be open yet. For sake of simplicity, all the drivers are shown initially coupled to host A.

In normal operation, a variable number of streams is open at a same time through the multiplexer, but at least one stream is maintained open to indicate the correct operation of host A. If all the streams happen to be closed, this indicates that host A is not operating correctly. A switch over is then initiated, meaning that host B must take over all the links to the drivers.

The multiplexer driver is arranged to detect that no stream is open from host A and switch to a persistent position where all the drivers which were coupled to host A are coupled to host B, as shown by broken lines. This avoids substantial overhead, because, normally, the embedded operating system would have to carry out the steps of reconfiguring a standard multiplexer driver link by link.

Having thus described at least one illustrative embodiment of the invention, various alterations, modifications, and improvements will readily occur to those skilled in the art. Such alterations, modifications, and improvements are intended to be within the spirit and scope of the invention. Accordingly, the foregoing description is by way of example only and is not intended to be limiting. The invention is limited only as defined in the following claims and the equivalents thereto.

## Claims

1. A computer system including, in operation:
• a host computer running a first operating system;
• a remote device coupled to the host computer through a network connection, having at least one resource, and running a second operating system; and
• a cross-interconnect driver having a first component running on the host computer and a second component running on the remote device, both components cooperating through the network connection such that an application program running on the host computer has access to the resource of the remote device as if it were on the host computer.

2. The computer system of claim 1, including, in operation, a second host computer similar to the first, running standby applications corresponding to active applications running on the first host computer, such that, when an active application fails to communicate with the remote device, the corresponding standby application takes over communication with the remote device.

3. The computer system of claim 2, wherein the operating systems of the host computers and the remote device implement a STREAMS mechanism for user applications to access device drivers, and wherein the second component of the cross-interconnect driver includes a STREAMS multiplexer coupling the two host computers to a device driver of said resource, the multiplexer having an initial setting where it couples the first host computer to the resource, and being arranged to automatically switch to a setting where it couples the second host computer to the resource when the first host computer fails to communicate with the remote device.

4. The computer system of claim 3, wherein the switching of the multiplexer is triggered by a stream close command issued by the second operating system as a consequence of a communication failure with the first host computer.

5. The computer system of claim 1, wherein the operating systems of the host computer and the remote device implement a STREAMS mechanism for user applications to access device drivers, and wherein the first component of the cross-interconnect driver is arranged, when receiving from a user application an open command for said resource of the remote device, to check the last state of the remote device, stored locally as the result of the last command sent to the remote device, return an open success message to the user application if said last state is valid, and send a message to the remote device to open the resource for communication.

6. The computer system of claim 5, wherein the first and second components of the cross-interconnect driver are arranged to return a stream error message to the user application if the resource cannot be opened in response to the message sent by the first component to open the resource.
